# EUROPEAN PATENT SPECIFICATION

(11) **EP 3 523 520 B1**
(45) Date of publication and mention of the grant of the patent: **02.12.2020**
(21) Application number: 17794073.1
(22) Date of filing: 04.10.2017
(51) Int. Cl.: F01N 3/20, F01N 9/00

(54) **UREA SENDER UNIT**
HARNSTOFFFÖRDEREINHEIT
UNITÉ D'ALIMENTATION D'URÉE

(30) Priority: 04.10.2016 IT 201600099492
(43) Date of publication of application: 14.08.2019
(73) Proprietor: Errecinque S.r.l., 10072 Mappano (IT)
(72) Inventor: GIACHINO, Massimo, 10040 Leini' (IT); CICCARELLI, Fabrizio, 10040 Leini' (IT)
(74) Representative: Faraldi, Marco
(86) International application number: PCT/IB2017/056111
(87) International publication number: WO 2018/065912

(56) References cited:
- EP-A1- 2 065 578
- EP-A1- 2 065 578
- EP-A1- 2 652 275
- WO-A1-2014/192318
- US-A1- 2010 162 690
- US-A1- 2010 162 690
- US-A1- 2012 031 082
- US-A1- 2012 031 082

## Description

### TECHNICAL FIELD

The invention relates to a sender unit for conveying urea, in particular to a sender unit for conveying urea for an industrial vehicle.

### BACKGROUND ART

In order to reduce polluting emissions of Diesel engines, an emission reduction technique is used, which is known as "selective catalytic reduction" or SCR. This technique is based on the injection, into the flow of burnt gases, of a urea-based solution, which, through a chemical reaction, transforms nitrogen oxides into nitrogen and water in an elementary gaseous state, thus significantly reducing the level of pollutants in Diesel engines. This urea solution, usually known as ADBLUE ®, is normally contained in a dedicated tank of the vehicle.

The urea solution is conveyed into the exhaust gas flow by means of a distribution circuit and, in order to control the temperature of the urea solution, it is kept at a controlled temperature level by means of a conditioning circuit.

In order to do so, urea sender units are used, which are partially inserted in the urea containing tanks and are basically configured to enable the withdrawal and the conditioning of the urea contained in the tank, in particular so as to prevent it from freezing.

In particular, the conditioning circuit usually comprises an electrovalve, which allows a conditioning fluid of the conditioning circuit to flow inside an urea sender unit and is controlled by the control unit of the vehicle based on the information coming from a temperature sensor, which is located in the tank of the urea solution.

This electrovalve is usually installed on the frame of the vehicle by means of a bracket and is connected to the control unit of the vehicle by means of a dedicated wiring. Furthermore, the fluidic connection between the electrovalve and the conditioning circuit is ensured by specific connection pipes.

However, due to the presence of the bracket, of the dedicated wiring and of the connection pipes, this configuration of the conditioning circuit takes up a lot of space and is expensive.

Therefore, there is the need to provide urea conditioning circuits that are small and economic.

Examples of known urea management systems are discloses in documents US2010/162690 A1, US2012031082 A1 or EP2065578 A1.

### DISCLOSURE OF INVENTION

The object of the invention is to solve the technical problem described above.

In order to do so, the invention provides a urea sender unit according to the appended set of claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a perspective view of a urea sender unit according to the invention;

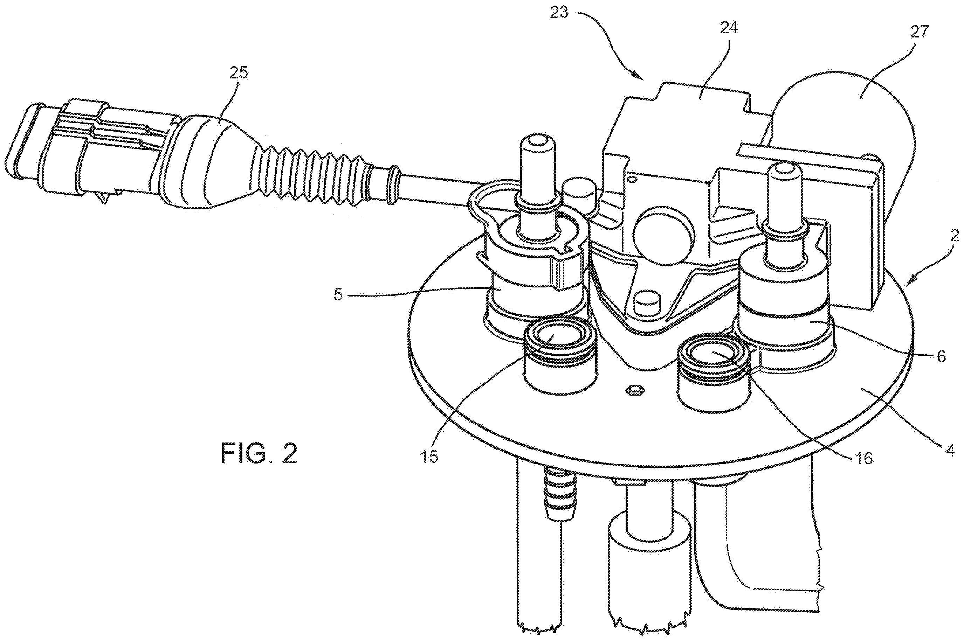

- figure 2 is an enlarged perspective view of an upper portion of the unit of figure 1;
- figure 3 is a diagram showing a urea conditionign circuit comprising a first embodiment of a urea sender unit according to the invention; and
- figure 4 is a diagram showing a urea conditionign circuit comprising a second embodiment of a urea sender unit according to the invention.

### BEST MODE FOR CARRYING OUT THE INVENTION

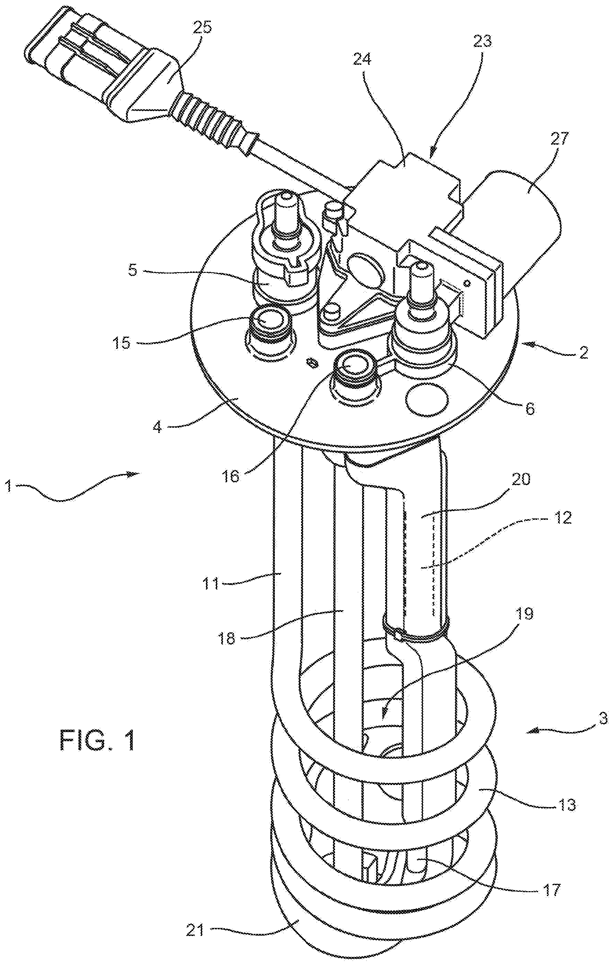

Figure 1 shows a urea sender unit 1 basically comprising a head 2, which is configured to be inserted into an opening with a complementary shape of a urea tank (tank shown) in a vehicle, and a heat exchange pipe 3, which is part of a urea conditionign circuit 100, which axially extends under the head 2.

The head 2 substantially has a circular shape and basically comprises a disc 4, in which a first orifice 5 and a second orifice 6 are obtained, which extend through the disc 4. The orifices 5 and 6 are configured to be connected, under the disc 4, to the heat exchange pipe 3 and, above the disc 4, to the urea solution conditioning circuit 100, as described more in detail hereinafter.

The heat exchange pipe 3 basically comprises a pair of vertical segments 11, 12 and a coil 13. Preferably, the first vertical segment 11 is connected to the first orifice 5 and the second vertical segment 12 is connected to the second orifice 6, whereas the coil 13 is connected, at its end, to the first segment 11 and to the second segment 12, respectively, and axially extends away from the head 2.

Furthermore, one the disc 4 there are two further orifices, a third orifice 15 and a fourth orifice 16, which are both configured to be connected, above the head 2, to respective supply and withdrawal ducts of a urea distribution circuit (not shown). The fourth orifice 16 is further configured to be connected, under the head 2, to an a suction duct 17 to suck the urea solution contained in the tank of the vehicle.

Preferably, the duct 17 axially extends from the head 2 into a substantially cylindrical volume 19, which is delimited by the loops of the coil 13. More preferably, the duct 17 is housed inside a polymer material jacket 20, which wraps it together with the vertical segment 12 of the heat exchange pipe 3.

The volume 19 further houses, in a lower and substantially terminal position of the unit 1, a damper 21 with a cylindrical shape, which is configured to fulfil different functions. First of all, the damper 21 acts as a dynamic damper for the entire urea sender unit 1; secondly, it acts as a filter for the suction pipe 17; finally, it acts as a support for sensor means.

The sensor means can comprise, for example, a temperature sensor, a concentration sensor or a level sensor 18 for the urea solution. In the embodiment shown, the temperature sensor and the concentration sensor are not shown and are preferably located at the bottom of the damper 21.

The level sensor 18 is known and substantially comprises a pipe axially extending from the damper 21 to the head 2.

The urea sender unit 1 further comprises an electrical interface unit 23, which is housed on the head 2 and basically comprises an electrical unit 24, which is designed to convey the signals coming from the sensor means, and a connector 25, which is configured to connect the electrical unit 24 to a control unit (not shown) of the vehicle. The electrical interface unit 23 is further electrically connected to an electrovalve 27, which is fixed on the disc 4 close to the orifice 6.

In a possible alternative embodiment, the electrical unit 24 comprises electronic means, which are configured to directly process the signals coming from the sensor means and to control the electrovalve 27, thus not going through the control unit of the vehicle.

In a first embodiment, the elctrovalve 27 preferably is a two-way two-position valve and is configured to selectively allow the conditioning fluid to flow inside the heat exchange pipe 3 through the orifice 6.

In a second embodiment, the elctrovalve 27 preferably is a three-way two-position valve and is configured to selectively allow the conditioning fluid to flow inside the heat exchange pipe 3 through the orifice 6 or inside a bypass pipe of the conditioning circuit 100, as described more in detail hereinafter.

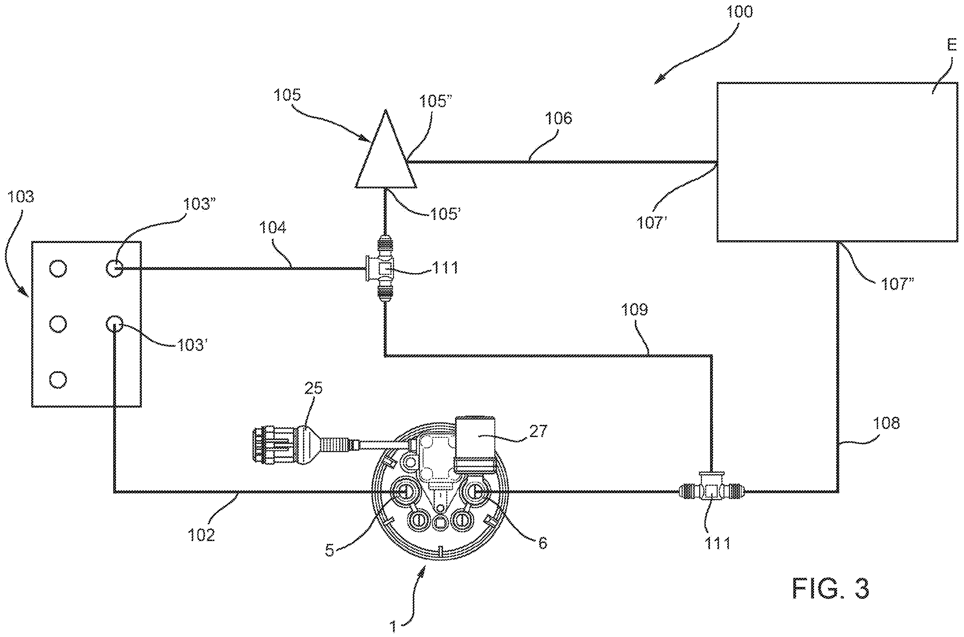

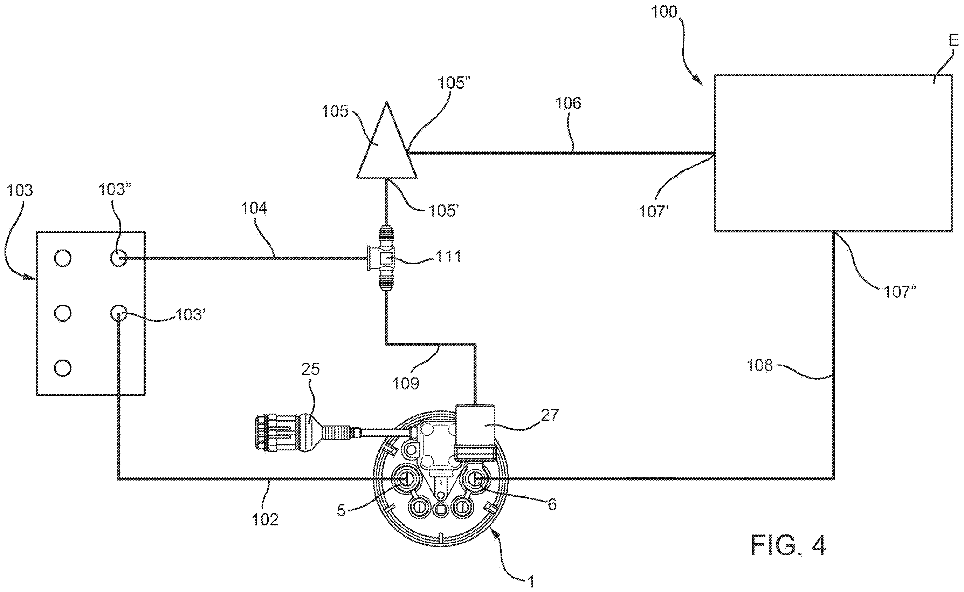

Figures 3 and 4 show, in a schematic manner, the conditioning circuit 100 for the urea solution, which comprises a urea sender unit 1 of the type described above.

The orifice 5 of the sender unit 1 is connected, through a pipe 102, to an inlet 103' of a pumping module 103. The pumping module 103 is configured to enable the recirculation of the conditionign fluid inside the conditioning circuit 100.

An outlet 103" of the pumping module 103 is connected, through a pipe 104, to an inlet 105' of a an injecting module 105.

The injecting module 105 is fluidically connected to the orifice 16, by means of dedicated and not shown pipes, and is configured to inject the urea solution into the exhaust gas circuit.

An outlet 105" of the injecting module 105 is connected, by means of a pipe 106, to an inlet 107' of an internal combustion engine E. Preferably, the inlet 107' is the inlet of a cooling circuit of the internal combustion engine E.

An outlet 107" of the internal combustion engine E is connected, by means of a pipe 108, to the orifice 5 of the urea sender unit 1. On the pipe 108, upstream of the orifice 6 following the flow of the conditioning fluid, there is the electrovalve 27 carried by the urea sender unit 1, which selectively allows the conditioning fluid to flow into the heat exchange pipe 3 of the unit 1 through the orifice 6.

In the first embodiment (figure 3), in which the sender unit 1 comprises two-way, two-position electrovalve, the conditioning circuit 100 further comprises a bypass pipe 109, which connects the pipes 108 and 104 to one another, respectively upstream of the electrovalve 27 and downstream of the injecting module 105.

The bypass pipe 109 is connected to the pipes 108 and 104 by means of respective unions 111, namely simple three-way unions, and is necessary in order to distribute the conditioning fluid flow when the electrovalve 27 does not permit the passage of the fluid in the heat exchange pipe 3.

In the second embodiment (figure 4), in which the electrovalve 27 is a three-way, two-position valve, the bypass pipe 109 is directly connected to the solenoid valve 27, which is configured to selectively permit the passage of the fluid in the heat exchange pipe 3 and directly into the bypass pipe 109. Therefore, there is only one simple three-way union 111, which connects the bypass pipe 109 to the pipe 104.

The sender unit 1 works as follows.

Preferably, the conditioning fluid for the urea solution is the cooling fluid of an internal combustion engine E.

The signals coming from the sensor means are sent to the control unit of the vehicle, which, after having processed these signals, sends a corresponding command to the elctrovalve 27. In the alternative embodiment, in which the electrical unit 24 comprises electronic means, the signals are directly processed by the electrical unit 24.

In a first operating condition, the electrovalve 27 enables the flow of a part of the conditionign fluid coming from the internal combustion engine E in the heat exchange pipe 3. By so doing, the conditioning fluid heats the urea solution contained in the tank during its path in the heat exchange pipe between the orifice 6 and the orifice 5.

From the pumping module 103, the conditioning fluid flows towards the injecting module 105, which, as it is arranged on the exhaust gas duct, has a high temperature. The conditioning fluid, after having cooled down during the heating of the urea solution, cools down the injecting module 105, thus heating up in turn.

From the injecting module 105, the fluid flows inside the internal combustion engine E exchanging heat with it and further heating up. From the internal combustion engine E, the heated fluid can start another urea solution conditioning cycle, as already described above.

At the same time, another part of the conditioning fluid flows in the bypass pipe 109 between the pipe 108 and the injecting module 105.

In a second operating condition, the electrovalve 27 does not allow the conditioning fluid to flow in the heat exchange pipe 3 and, therefore, the fluid circulates between the pipes 106, 108 and the bypass pipe 109, exclusively exchanging heat with the injecting nodule 105 and the internal combustion engine E.

In the second embodiment, the electrovalve 27, which is a three-way, two-position valve, allows the conditioning fluid to be directly introduced into the pipe 109 or into the heat exchange pipe 3, with no need for a further union 111 upstream of the electrovalve 27, which is present in the first embodiment. The operation of the conditioning circuit 100 is otherwise similar to the one described for the first embodiment.

The features described above reveal the advantages of a urea sender unit 1 according to the invention and of a urea conditioning circuit 100 comprising said unit.

The urea sender unit 1, as it is provided with an integrated electrovalve 27, allows manufacturers to produce a conditioning circuit 100 with smaller dimensions and which needs less pipes and wiring for the urea sender unit.

Therefore, the conditioning circuit 100 is economic, small-sized and easy to be manufactured.

Finally, the urea sender unit 1 described and shown herein can be subjected to changes and variants, which do not go beyond the scope of protection set forth in the appended claims.

For example, the urea sender unit 1 could contain further sensors or not contain any one of the sensors described herein.

## Claims

1. A sender unit (1) for conveying a solution of urea into a vehicle, comprising an upper portion (2) configured to be inserted in an opening of a tank for said urea solution, said upper portion (2) defining a first and a second orifice (5, 6) adapted to be connected to an inlet pipe (11) and to an outlet pipe (12) forming part of a conditioning circuit (100), said sender unit (1) further comprising:
- a heat exchange pipe (3) connected to the first and to the second orifice (5, 6) and adapted to be at least partially immersed in said urea solution,
- sensor means adapted to detect a temperature of said urea solution, and
- an electrical interface unit (23) connected to said sensor means and configured to exchange electrical signals with an external electronic unit,
said sender unit (1) comprising an electrovalve (27) carried by said upper portion (2) and connected to said interface unit (23) and configured to control the flow of said conditioning fluid in said conditioning circuit (100),
**characterized in that** said electrovalve (27) is a three-way two-position valve and **in that** said electrical interface unit (23) comprises an electrical unit (24) comprising electronic means adapted to directly process the signals coming from said sensor means and control said electrovalve (27).

2. A sender unit (1) for conveying urea as claimed in claim 1, **characterized in that** said conditioning fluid is a cooling fluid for cooling the engine of said vehicle.

3. A sender unit (1) for conveying urea according to claim 1 or 2, **characterized in that** a heat exchange pipe (3) comprises a coil (13).

4. A sender unit (1) for conveying urea according to any one of the claims from 1 to 3,
**characterized in that** said sensor means are adapted to detect the concentration of said urea solution.

5. A sender unit (1) for conveying urea according to any one of the claims from 1 to 4,
**characterized in that** said sensor means are adapted to detect the level of said solution in said tank.

6. A sender unit (1) for conveying urea according to any one of the claims from 1 to 5,
**characterized in that** it comprises a supply duct (18) and a withdrawal duct (17) for said urea solution which pass through said upper portion (2).

## Patentansprüche

1. Sendereinheit (1) zum Fördern einer Harnstofflösung in ein Fahrzeug, umfassend einen oberen Teil (2), der so konfiguriert ist, dass er in eine Öffnung eines Tanks für die Harnstofflösung eingeführt werden kann, wobei der obere Teil (2) eine erste und eine zweite Öffnung (5, 6) definiert, die mit einer Einlassleitung (11) und einer Auslassleitung (12) verbunden werden können, die Teil eines Konditionierungskreislaufs (100) bilden, die Sendeeinheit (1) ferner umfassend:
- ein Wärmeaustauschrohr (3), das mit der ersten und mit der zweiten Öffnung (5, 6) verbunden ist und dazu geeignet ist, zumindest teilweise in die Harnstofflösung eingetaucht zu werden,
- Sensorvorrichtung, die geeignet ist, eine Temperatur der Harnstofflösung zu erfassen, und
- eine elektrische Schnittstelleneinheit (23), die mit der Sensorvorrichtung verbunden und so konfiguriert ist, dass sie elektrische Signale mit einer externen elektronischen Einheit austauschen kann,
- wobei die Sendereinheit (1) ein Elektroventil (27) umfasst, das von dem oberen Abschnitt (2) getragen wird und mit der Schnittstelleneinheit (23) verbunden ist und konfiguriert ist, um den Fluss des Konditionierungsfluids in dem Konditionierungskreislauf (100) zu steuern,
**dadurch gekennzeichnet, dass** das Elektroventil (27) ein Dreiwegeventil mit zwei Stellungen ist und dass die elektrische Schnittstelleneinheit (23) eine elektrische Einheit (24) umfasst, die elektronische Mittel umfasst, die geeignet sind, die von der Sensorvorrichtung kommenden Signale direkt zu verarbeiten und das Elektroventil (27) zu steuern.

2. Sendereinheit (1) zum Fördern von Harnstoff nach Anspruch 1, **dadurch gekennzeichnet, dass** das Konditionierungsfluid ein Kühlfluid zum Kühlen des Motors des Fahrzeugs ist.

3. Sendereinheit (1) zum Fördern von Harnstoff nach Anspruch 1 oder 2, **dadurch gekennzeichnet, dass** ein Wärmetauschrohr (3) eine Spule (13) umfasst.

4. Sendereinheit (1) zum Fördern von Harnstoff nach einem der Ansprüche von 1 bis 3, **dadurch gekennzeichnet, dass** die Sensorvorrichtung geeignet ist, die Konzentration der Harnstofflösung zu erfassen.

5. Sendereinheit (1) zum Fördern von Harnstoff gemäß einem der Ansprüche 1 bis 4, **dadurch gekennzeichnet, dass** die Sensorvorrichtung dazu ausgelegt ist, den Füllstand der Lösung in dem Tank zu erfassen.

6. Sendereinheit (1) zum Fördern von Harnstoff gemäß einem der Ansprüche von 1 bis 5, **dadurch gekennzeichnet, dass** sie eine Zufuhrleitung (18) und eine Entnahmeleitung (17) für die Harnstofflösung umfasst, welche durch den oberen Teil (2) verlaufen.

## Revendications

1. Unité de distribution (1) destinée à transporter une solution d'urée vers un véhicule, comprenant une partie supérieure (2) conçue pour être introduite dans une ouverture d'un réservoir pour ladite solution d'urée, ladite partie supérieure (2) délimitant un premier et un second orifice (5, 6) conçus pour être raccordés à un tuyau d'admission (11) et à un tuyau d'évacuation (12) faisant partie d'un circuit de conditionnement (100), ladite unité de distribution (1) comprenant en outre :
- un tuyau d'échange de chaleur (3) raccordé au premier et au second orifice (5, 6) et conçu pour être au moins partiellement immergé dans ladite solution d'urée,
- des moyens de capteur conçus pour détecter une température de ladite solution d'urée, et
- une unité d'interface électrique (23) reliée auxdits moyens de capteur et configurée pour échanger des signaux électriques avec une unité électronique externe,
ladite unité de distribution (1) comprenant une électrovanne (27) portée par ladite partie supérieure (2) et reliée à ladite unité d'interface (23) et configurée pour commander l'écoulement dudit fluide de conditionnement dans ledit circuit de conditionnement (100),
**caractérisée en ce que** ladite électrovanne (27) est une vanne à deux positions et trois voies et **en ce que** ladite unité d'interface électrique (23) comprend une unité électrique (24) comprenant des moyens électroniques conçus pour traiter directement les signaux provenant desdits moyens de capteur et pour commander ladite électrovanne (27).

2. Unité de distribution (1) destinée à transporter de l'urée selon la revendication 1, **caractérisée en ce que** ledit fluide de conditionnement est un fluide de refroidissement permettant de refroidir le moteur dudit véhicule.

3. Unité de distribution (1) destinée à transporter de l'urée selon la revendication 1 ou 2, **caractérisée en ce qu'**un tuyau d'échange de chaleur (3) comprend un serpentin (13).

4. Unité de distribution (1) destinée à transporter de l'urée selon l'une quelconque des revendications 1 à 3, **caractérisée en ce que** lesdits moyens de capteur sont conçus pour détecter la concentration de ladite solution d'urée.

5. Unité de distribution (1) destinée à transporter de l'urée selon l'une quelconque des revendications 1 à 4, **caractérisée en ce que** lesdits moyens de capteur sont conçus pour détecter le niveau de ladite solution dans ledit réservoir.

6. Unité de distribution (1) destinée à transporter de l'urée selon l'une quelconque des revendications 1 à 5, **caractérisée en ce qu'**elle comprend un conduit d'alimentation (18) et un conduit de prélèvement (17) pour ladite solution d'urée qui passent à travers ladite partie supérieure (2).
